# EUROPEAN PATENT APPLICATION

(11) **EP 3 799 978 A1**
(43) Date of publication of application: **07.04.2021**
(21) Application number: 20192257.2
(22) Date of filing: 21.08.2020
(51) Int. Cl.: B23H 9/10, B23H 9/14, B23K 26/382, F01D 5/18, B23H 1/00, B23K 101/00

(54) **LASER ROUGH DRILL AND FULL EDM FINISH FOR SHAPED COOLING HOLES**

(30) Priority: 26.08.2019 US 201916550807
(71) Applicant: Raytheon Technologies Corporation, Farmington, CT 06032 (US)
(72) Inventor: THAYER, Henry H., Wethersfield, CT Connecticut 06109 (US); NOVIKOV, Dmitri, Avon, CT Connecticut 06001 (US)
(74) Representative: Dehns

(57) **Abstract**

A process of forming a shaped cooling passage (18; 34) in an article (10) comprising positioning the article (10) within a laser drilling apparatus; laser ablating a near net-shaped cooling passage (18; 34) having a meter section (48) and a diffuser section (52); forming a re-cast (60) on an interior wall of said cooling passage (18; 34) in both the meter section (48) and the diffuser section (52); positioning the article (10) within an electric discharge machining apparatus; and electric discharge machining said re-cast (60) from said interior wall at both the meter section (48) and diffusor section (52) with the same electric discharge machine electrode (64) to form a finished shaped cooling passage (18; 34).

## Description

### BACKGROUND

The present disclosure is directed to a process of forming cooling passages having both a meter portion and a diffuser portion by employing a laser drilling technique followed by an electrical discharge machining technique. Particularly, a laser is used to form a near net shaped hole and an electrical discharge machining electrode finishes the entire cooling passage including both the meter portion and the diffuser portion.

Gas turbine engine components, such as rotor blades and vanes, are used in environments having temperatures approaching or exceeding the allowable temperature limits of the materials used in those components. Cooling fluid is flowed through and over the external surfaces of the components to avoid overheating of the components and its inherent structural degradation. In a typical application, cooling air is flowed through the blade or vane and then ejected through passages extending through to the external surface.

To optimize the effectiveness of the cooling, the cooling passages are angled and shaped to produce a film of cooling fluid over the external surface of the component. These passages include a metering section and a diffusing section. The metering section controls the amount of cooling fluid flowing through the passage. The diffusing section reduces the velocity of the ejected fluid to encourage the fluid to form a boundary layer of cooling fluid downstream of the passage. In addition, the diffusing section maximizes the amount of external surface area covered by the film of cooling fluid.

Forming shaped cooling passages in materials such as those used in gas turbine engines presents difficulties. One popular method is to form the passages by electric-discharge machining (EDM). EDM provides an easy method to form the complex shape of the diffusing portion while also providing the accuracy required for the metering section. EDM process involves material removal from the work piece by a series of rapidly recurring current discharges between two electrodes, separated by a dielectric liquid and subject to an electric voltage. One of the electrodes is called the tool-electrode, or simply the "tool" or "electrode," while the other is called the workpiece-electrode, or "work piece." The process depends upon the tool and work piece not making actual contact. When the voltage between the two electrodes is increased, the intensity of the electric field in the volume between the electrodes becomes greater than the strength of the dielectric (at least in some places), which breaks down, allowing current to flow between the two electrodes. This phenomenon is the same as the breakdown of a capacitor (condenser) (see also breakdown voltage). As a result, material is removed from the electrodes. Once the current stops (or is stopped, depending on the type of generator), new liquid dielectric is usually conveyed into the inter-electrode volume, enabling the solid particles (debris) to be carried away and the insulating properties of the dielectric to be restored. Adding new liquid dielectric in the inter-electrode volume is commonly referred to as flushing. Also, after a current flow, the difference of potential between the electrodes is restored to what it was before the breakdown, so that a new liquid dielectric breakdown can occur.

For many applications, a one-step EDM method is sufficient to form the shaped passages. However, for passages having excessive length a one-step EDM method may not be economically efficient due to the time intensive nature of the process relative to other available processes.

What is needed is a process of precisely forming the shaped passages in a timely economically efficient manner.

### SUMMARY

In accordance with the present disclosure, there is provided a process of forming a shaped cooling passage in an article comprising positioning the article within a laser drilling apparatus; laser drilling a near net-shaped cooling passage having a meter section and a diffuser section, wherein a re-recast (or a re-cast) is formed on an interior wall of the cooling passage in both the meter section and the diffuser section; positioning the article within an electric discharge machining apparatus; and electric discharge machining the recast from the interior wall at both the meter section and diffusor section with the same electric discharge machine electrode to form a finished shaped cooling passage.

In optional embodiments of the above, the electric discharge machine electrode is shaped for both the meter section and the diffuser section.

In optional embodiments of any of the above, the process further comprises locating the near net-shaped cooling passage prior to the electric discharge machining with a vision system; and aligning the electric discharge machine electrode with the near net-shaped cooling passage.

In optional embodiments of any of the above, the article comprises a flow surface.

In optional embodiments of any of the above, the cooling passage is canted at an angle relative to the flow surface and configured to direct cooling fluid.

In optional embodiments of any of the above, the article is a gas turbine engine rotor blade having an airfoil coupled to a platform and the cooling passages formed within at least one of the airfoil and the platform.

In optional embodiments of any of the above, the meter section and the diffuser section are formed in the absence of duplicating or reintroducing separate electrodes for each of the diffuser section and the meter section.

In optional embodiments of any of the above, the article is selected from the group consisting of a rotor blade, a vane and a combustion chamber panel.

Other details of the process of forming a cooling passage are set forth in the following detailed description and the accompanying drawings wherein like reference numerals depict like elements.

### BRIEF DESCRIPTION OF THE DRAWINGS

FIG. 1 is a perspective view of a gas turbine engine rotor blade having an airfoil portion with shaped cooling passages and a platform with shaped cooling passages.
FIG. 2 is a sectioned view of the rotor blade taken along line 2-2 of FIG. 1, showing the passage axis for each cooling passage.
FIG. 3 is a top view of the rotor blade showing the alignment of the cooling passages in the platform portion.
FIG. 4. is an illustrative view of the rotor blade within a laser drilling apparatus.
FIG. 5. is an illustrative view of the rotor blade within an electric discharge machining apparatus.
FIG. 6 is a cross-section of an exemplary article with a passage in stages of construction.
FIG. 7 is a cross-section view of an exemplary article prior to the exemplary process.
FIG. 8 is a cross-section view of an exemplary article with the diffuser being laser drilled during the exemplary process.
FIG. 9 is a cross-section view of an exemplary article with the meter being laser drilled during the exemplary process.
FIG. 10 is a cross-section view of an exemplary article with the recast material from the laser application of the exemplary process.
FIG. 11 is a cross-section view of an exemplary article with the diffuser and the meter being EDM drilled during the exemplary process.
FIG. 12 is a cross-section view of an exemplary article with the diffuser and the meter being EDM drilled during the exemplary process.
FIG. 13 is a cross-section view of an exemplary article with the diffuser and the meter finished after the exemplary process.

### DETAILED DESCRIPTION

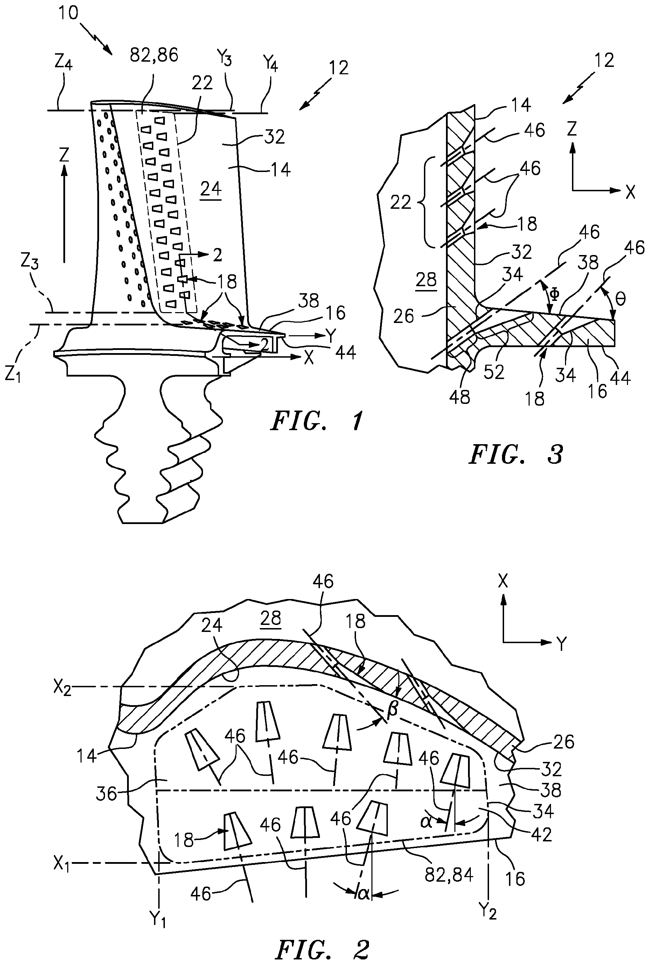

FIG. 1 illustrates an article 10 having shaped passages. As shown in FIG. 1, the article 10 can be a gas turbine engine rotor blade 12 having an airfoil 14, a platform 16, and multiple shaped cooling passages 18.

The airfoil 14 includes a plurality of shaped cooling passages 22 disposed along the pressure side 24 of the airfoil 14. As shown in FIG. 2, the plurality of cooling passages 22 extend through the wall 26 of the airfoil 14 and provide flow communication between the hollow core 28 of the airfoil 14 and the external surface 32 of the airfoil 14. Cooling fluid exiting the plurality of cooling passages 22 forms a film or buffer of cooling fluid flowing over the external surface 32 downstream of the plurality of cooling passages. This film of cooling fluid insulates the external surface 32 of the airfoil 14 from the hot gases flowing through the gas turbine engine.

The platform 16 includes another plurality of cooling passages 34 extending through the platform 16. A first group of the cooling passages 34 are adjacent to the airfoil 14. As shown in FIG. 3, this group of cooling passages 36 extend from the hollow core 28 to the flow surface 38 of the platform 16 to provide flow communication between the core 28 and the flow surface 38 of the platform 16. A second group of cooling passages 42 are spaced laterally from the airfoil 14. This group of cooling passages 34 extend through the platform 16 to provide flow communication between the underside 44 of the platform 16 and the flow surface 38 of the platform 16. The two groups of cooling passages 36, 42 in conjunction generate a film of cooling fluid flowing over the flow surface 38 of the platform 16.

Each cooling passage 18 is disposed about a passage axis 46 and includes a meter section 48 and a diffuser section 52. The meter section 48 is centered on the passage axis 46 and is of constant diameter. The meter section 48 controls the amount of cooling fluid flowing through the cooling passage 18. The diffuser section 52 expands outwardly such that the velocity of the cooling fluid flowing through the metering section 48 decreases and the body of fluid spreads over a greater area. The shape of each particular cooling passage 18 can be tailored to meet the particular cooling requirement.

In an exemplary embodiment the cooling passage 18 can be canted at a particular angle relative to the flow surface over which it is directing cooling fluid. For the airfoil cooling passages 18, these angles are represented by the character β and are shown as being approximately equal to each other. For the platform cooling passages 34, these angles are represented by the character ϕ. The angles are different depending upon the location of the platform cooling passage 34. In addition, each of the platform cooling passages 34 form an angle α with a common reference, as shown in FIG. 2. The specific orientation of each of the cooling passages 18, whether in the airfoil 14 or the platform 16, contributes to the capabilities of the cooling passages 18 to generate the necessary film of cooling fluid over the flow surfaces of the blade 12.

Forming the shaped cooling passages 18 requires two independent passage forming operations, one for the near net-shape meter section 48 and the diffusor section 52 of each cooling passage 18 and one for the finished version of the meter section 48 and the diffusor section 52 of each cooling passage 18. For illustrative purposes, the process includes a laser drilling operation and an EDM operation will be shown and described as the methods for forming the meter section 48 and the diffusor section 52, respectively. Laser drilling is a time and cost efficient method to make the straight, constant diameter passages for both the meter section 48 and diffusor section 52. EDM is a method for making passages having three-dimensionally complex shapes, such as the diffusor section 52.

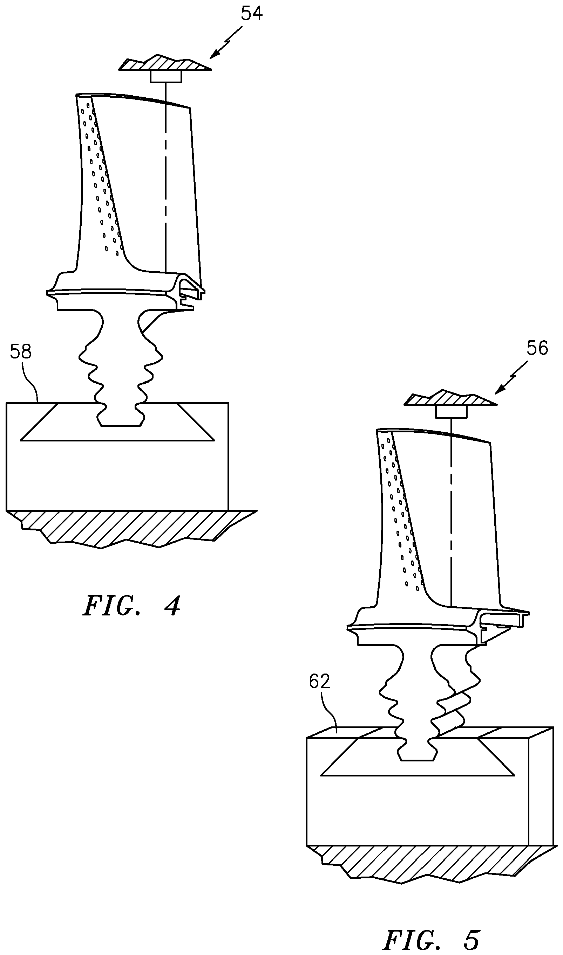

FIGS. 4 and 5, the rotor blade 12 is first positioned within the laser drilling apparatus 54 and secured onto a multi-axis mount 58. The mount 58 permits the rotor blade 12 to be moved and rotated into the proper position for the laser drilling operation. The location of each of the cooling passages 18 is programmed into the laser drilling apparatus 54 in accordance with the device's internal coordinate system, such that, each cooling passage 18 has its own position P1. The mount 58 and rotor blade 12 are repositioned by moving or rotating the mount 58 such that each cooling passage 18 is formed in the proper position, within the tolerances of the device.

Upon completion of the laser drilling of both the meter sections 48 and diffusor sections 52, the rotor blade 12 is removed from the laser drilling apparatus 54. Laser backing material, used conventionally to prevent back wall strikes during laser drilling, is removed from the rotor blade 12. The rotor blade 12 is then placed within the EDM apparatus 56. Again, a multi-axis mount 62 is used to position and rotate the rotor blade 12 into the proper orientation for the EDM passage forming. As with the laser drilling device, the EDM apparatus 56 has its own internal coordinate system and each cooling passage 18 has a spatial position P2 within that coordinate system. Both the meter sections 48 and diffusor sections 52 are formed at the specified locations, again within the tolerances of the EDM apparatus 56.

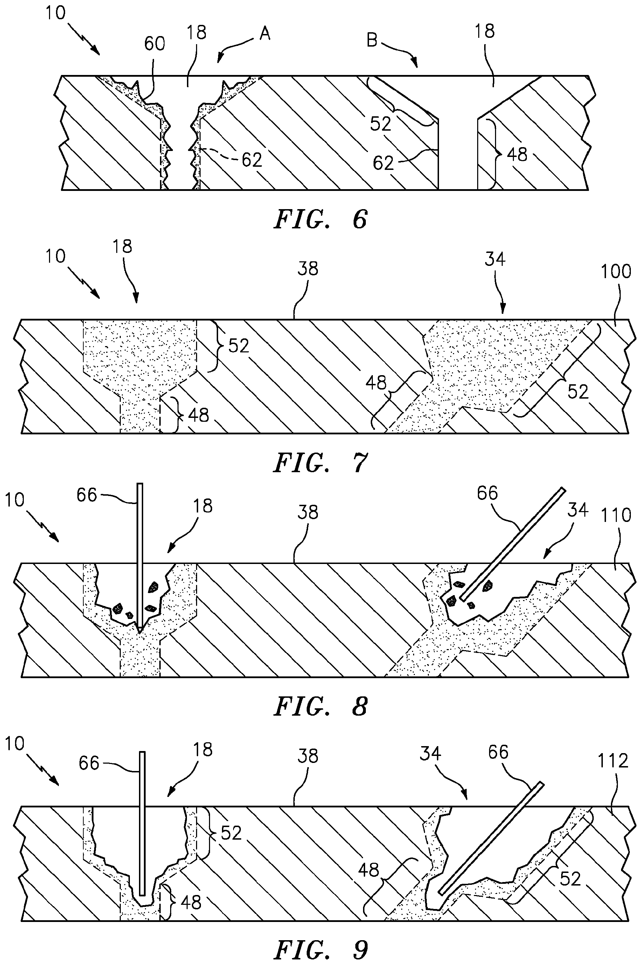

FIG. 6 illustrates the article 10 at a stage A of the process after the laser drilling showing the meter section 48 and diffuser section 52 at a near net shape with re-cast 60 along the interior walls 62 of the cooling passage 18. The laser drilling portion of the process, though fast, can be imprecise and generally leaves a layer of melted and resolidified metal, re-cast 60 in the hole for the flow passage 18. FIG. 6 also illustrates the article 10 at a stage B of the process after the EDM drilling with a precisely shaped EDM electrode showing the meter section 48 and diffuser section 52 in final shape and with a minimal amount of recast 60 along the interior walls 62 of the cooling passage 18.

Referring to FIG. 7 through FIG. 13, the exemplary process 100 can be further described. FIG. 7 shows the article 10 prior to any drilling with the planned cooling passages 18, 34 in dashed lines. The dashed lines represent the preprogramed design of the cooling passage in the first step of the process 100. As illustrated at FIG. 7, cooling passage 18 is more or less orthogonal to the surface 38 and cooling passage 34 includes an angle relative to the surface 38 as described above in more detail. The cooling passages 18 are shown with two different angles for disclosure purposes and are not intended to be limiting.

FIG. 8 illustrates the process step 110, with the commencement of laser drilling the cooling passages, 18, 34. The laser 66 can be any laser that ablates the article 10 material. The laser 66 is used to remove most all of the material in the diffuser section 52.

Step 112 of the process, shown at FIG. 9, includes laser drilling the portions of the meter section.

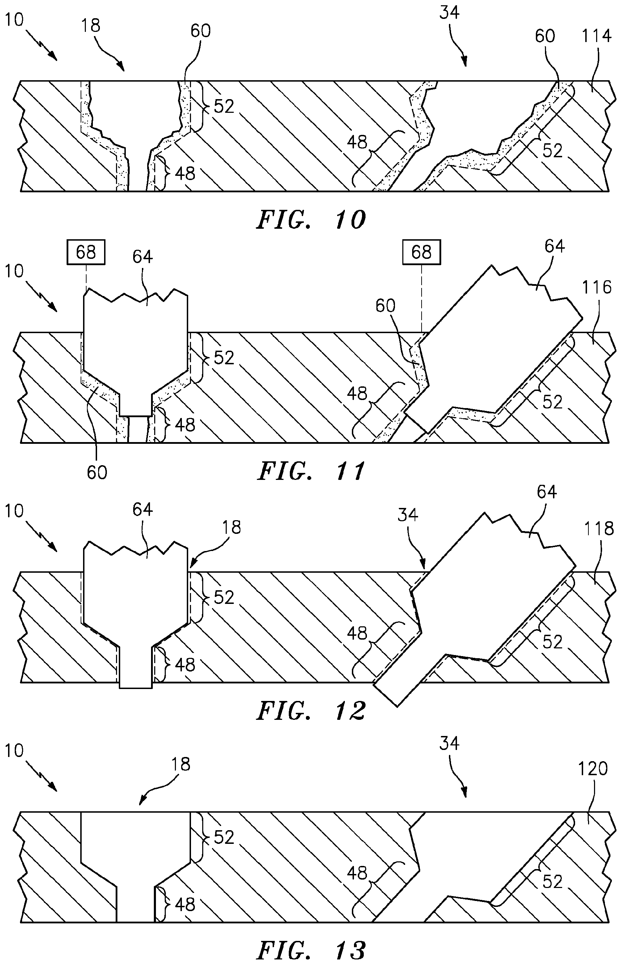

Step 114 of the process, shown in FIG. 10, illustrates that the laser 66 has created a near net-shape cooling passage 18, 34 with a remainder of re-cast 60.

Step 116 of the process, shown at FIG. 11, includes the use of an EDM electrode 64 to remove the remaining re-cast material 66 to produce a final finished interior wall 62. The technical advantage of the process 100 is that the EDM electrode 64 is configured to drill both the diffuser section 52 and the meter section 48 of the cooling passage 18, 34, without the need to duplicate or reintroduce separate electrodes for each of the diffuser section 52 and meter section 48. As part of step 116, a vision system 68 is employed in the process to locate the cooling passage 18, 34 with the re-cast 60 prior to inserting the EDM electrode 64 so that the precisely designed EDM electrode 64 can be more efficiently utilized. The coordinates stored in the CNC program bring the electrode 64 to the general area of the cooling passage 18, and then the vision system 68 is used to fine tune the position. The vision system 68 allows for the proper location of the laser drilled meter and diffuser of the cooling passage 18 and then for location of the EDM electrode 64.

Step 118 shown at FIG. 12 shows the EDM electrode 64 removing the re-cast 60 in both the diffuser section 52 and meter section 48. The same EDM electrode is used for both the diffuser section 52 and the meter section 48. A dielectric can be flowed through the cooling passage 18, 34, to enable the EDM electrode and flush out removed re-cast 60.

At step 120, shown in FIG. 13, the finished cooling passages 18 and 34 are seen with no re-cast 60.

A technical advantage of the disclosed process includes a straightforward technique to drill the initial meter and diffuser to near net shape using a laser and then using a vision system to locate the rough hole.

Another technical advantage of the disclosed process includes using a precisely shaped EDM electrode to remove the laser recast material and finish both the meter and the diffuser of the cooling passage, creating the precise shape needed.

Another technical advantage of the disclosed process includes the fact that laser drilling is far faster than EDM; laser drilling a shaped cooling hole by removing most of the material using the laser, saves enormous amounts of time.

Another technical advantage of the disclosed process includes using EDM to remove recast and finalize the shape of both meter and diffuser sections at the same time which cuts down process time and provides excellent cooling passage quality.

The disclosed process overcomes the drawbacks of previous systems that have not succeeded, because the time needed to find each rough hole and align the EDM electrode with the rough hole consumes much of the time saved by drilling the near net shape hole with a laser.

Using the vision system to rapidly locate each hole for finish EDM drilling saves most of the time that was lost in previous systems.

Another technical advantage of the disclosed process includes using the laser to rough form the near net-shape passage to save time, and then EDM finishing the entire passage (meter and diffuser) to provide the precise shape needed.

There has been provided a process of forming a cooling passage. While the process of forming a cooling passage has been described in the context of specific embodiments thereof, other unforeseen alternatives, modifications, and variations may become apparent to those skilled in the art having read the foregoing description. Accordingly, it is intended to embrace those alternatives, modifications, and variations which fall within the broad scope of the appended claims.

## Claims

1. A process of forming a shaped cooling passage (18; 22; 34) in an article (10) comprising:
positioning the article (10) within a laser drilling apparatus (54);
laser drilling a near net-shaped cooling passage (18; 22; 34) having a meter section (48) and a diffuser section (52), wherein a re-cast (60) is formed on an interior wall (62) of said cooling passage (18; 22; 34) in both the meter section (48) and the diffuser section (52);
positioning the article (10) within an electric discharge machining apparatus (56); and
electric discharge machining said re-cast (60) from said interior wall (62) at both the meter section (48) and the diffusor section (52) with the same electric discharge machine electrode (64) to form a finished shaped cooling passage (18; 22; 34).

2. The process according to claim 1, wherein said electric discharge machine electrode (64) is shaped for both said meter section (48) and said diffuser section (52).

3. The process according to claim 1 or 2, further comprising:
locating said near net-shaped cooling passage (18; 22; 34) prior to said electric discharge machining with a vision system (68); and
aligning said electric discharge machine electrode (64) with said near net-shaped cooling passage (18; 22; 34).

4. The process according to any preceding claim, wherein said article (10) comprises a flow surface (38).

5. The process according to claim 4, wherein the cooling passage (18; 22; 34) is canted at an angle (β; θ; φ) relative to the flow surface (38) and configured to direct cooling fluid.

6. The process according to any preceding claim, wherein said meter section (48) and said diffuser section (52) are formed in the absence of duplicating or reintroducing separate electrodes for each of the diffuser section (52) and the meter section (48) .

7. The process according to any preceding claim, wherein said article (10) is a gas turbine engine rotor blade (12) having an airfoil (14) coupled to a platform (16) and said cooling passages (18; 22; 34) formed within at least one of said airfoil (14) and said platform (16).

8. The process according to any of claims 1 to 6, where said article (10) is selected from the group consisting of a rotor blade (12), a vane and a combustion chamber panel.
